# EUROPEAN PATENT APPLICATION

(11) **EP 4 632 256 A1**
(43) Date of publication of application: **15.10.2025**
(21) Application number: 23900380.9
(22) Date of filing: 09.11.2023
(51) Int. Cl.: F16K 27/04, F16K 11/07, F16K 31/122

(54) **PILOT CAP UNIT**

(30) Priority: 09.12.2022 JP 2022197203
(71) Applicant: KYB Corporation, Minato-ku, Tokyo 105-5128 (JP)
(72) Inventor: ISHIBASHI, Koki, Tokyo 105-5128 (JP); YOSHIDA, Nobuyoshi, Tokyo 105-5128 (JP)
(74) Representative: Grünecker Patent- und Rechtsanwälte PartG mbB
(86) International application number: PCT/JP2023/040324
(87) International publication number: WO 2024/122259

(57) **Abstract**

A first pilot cap (40) includes: a valve body accommodation hole (55) capable of accommodating a part of a solenoid proportional pressure reducing valve (7a) configured to control a pressure of a pilot fluid to be supplied to a first pilot chamber (11a), a pilot passage (47) in communication with the valve body accommodation hole (55) and configured to lead the pilot fluid decompressed by the solenoid proportional pressure reducing valve (7a) to the first pilot chamber (11a), and a cap-side drain passage (49) in communication with the valve body accommodation hole (55) and configured to allow the pilot fluid discharged from the solenoid proportional pressure reducing valve (7a) to be led thereto, the solenoid proportional pressure reducing valve (7a) is attachable to the valve body accommodation hole (55), and instead of the solenoid proportional pressure reducing valve (7a), a plug (58) is attachable to the valve body accommodation hole (55), and in a state where the plug (58) is attached to the valve body accommodation hole (55), the pilot passage (47) and the cap-side drain passage (49) are always in communication with each other through a plug (58) passage formed in the plug (58).

## Description

### TECHNICAL FIELD

The present invention relates to a pilot cap unit.

### BACKGROUND ART

JP2019-190635A discloses a control valve including a cap. The cap includes a pilot cap that is attached to a valve housing in which a spool is incorporated and that defines a pilot chamber with the valve housing, and a solenoid valve that is attached to the pilot cap and controls a pressure of a working fluid to be supplied to the pilot chamber.

### SUMMARY OF INVENTION

In the control valve described in JP2019-190635A, some of control valves may be unused depending on a usage of a user. In the control valve described in JP2019-190635A, the working fluid discharged from a pump may leak into the unused pilot chamber through a space between an inner peripheral surface of a sliding hole in which the unused spool slides and an outer peripheral surface of the unused spool. In this case, the unused spool moves, and the unused control valve malfunctions.

An object of the present invention is to prevent an unused control valve from malfunctioning.

### SOLUTION TO PROBLEM

According to one aspect of the present invention, a pilot cap unit to be attached to a control valve having a valve housing through which a spool hole penetrates, a spool being slidably accommodated in the spool hole, the pilot cap unit includes: a first pilot cap attached to the valve housing to face one end of the spool hole, the first pilot cap defining a first pilot chamber between the valve housing and the first pilot cap, the first pilot cap includes: an accommodation hole capable of accommodating a part of a solenoid valve configured to control a pressure of a pilot fluid to be supplied to the first pilot chamber, a pilot passage in communication with the accommodation hole and configured to lead the pilot fluid decompressed by the solenoid valve to the first pilot chamber, and a drain passage in communication with the accommodation hole and configured to allow the pilot fluid discharged from the solenoid valve to be led thereto, the solenoid valve is attachable to the accommodation hole, and instead of the solenoid valve, a plug is attachable to the accommodation hole, and in a state where the plug is attached to the accommodation hole, the pilot passage and the drain passage are always in communication with each other through a plug passage formed in the plug.

### BRIEF DESCRIPTION OF DRAWINGS

[FIG. 1] FIG. 1 is a fluid pressure circuit diagram of a fluid pressure control device including a control valve.
[FIG. 2] FIG. 2 is a plan view of a first pilot cap of a pilot cap unit according to an embodiment of the present invention.
[FIG. 3] FIG. 3 is a side view of the first pilot cap viewed from a direction III in FIG. 2.
[FIG. 4] FIG. 4 is a sectional view illustrating the pilot cap unit and the control valve according to the embodiment of the present invention.
[FIG. 5] FIG. 5 is an enlarged sectional view illustrating a state where a plug is attached to the first pilot cap.

### DESCRIPTION OF EMBODIMENTS

A first pilot cap unit 100a and a second pilot cap unit 100b according to an embodiment of the present invention will be described with reference to the drawings. Hereinafter, the first pilot cap unit 100a and the second pilot cap unit 100b are collectively simply referred to as a "pilot cap unit 100".

The pilot cap unit 100 and a control valve 10 including the pilot cap unit 100 are provided in a fluid pressure control device 1. The fluid pressure control device 1 is a device that controls an actuator to be driven by a working fluid discharged from a pump, and is mounted on a work machine such as a construction machine, an agricultural machine, or an industrial machine. Hereinafter, a case where the fluid pressure control device 1 is mounted on a hydraulic excavator and is used to control operations of actuators such as a hydraulic motor for traveling and a hydraulic cylinder for driving a boom, an arm, a bucket, and the like will be described. An example in which a hydraulic oil is used as the working fluid for driving the actuator of the hydraulic excavator will be described, and another fluid such as working water may be used as the working fluid.

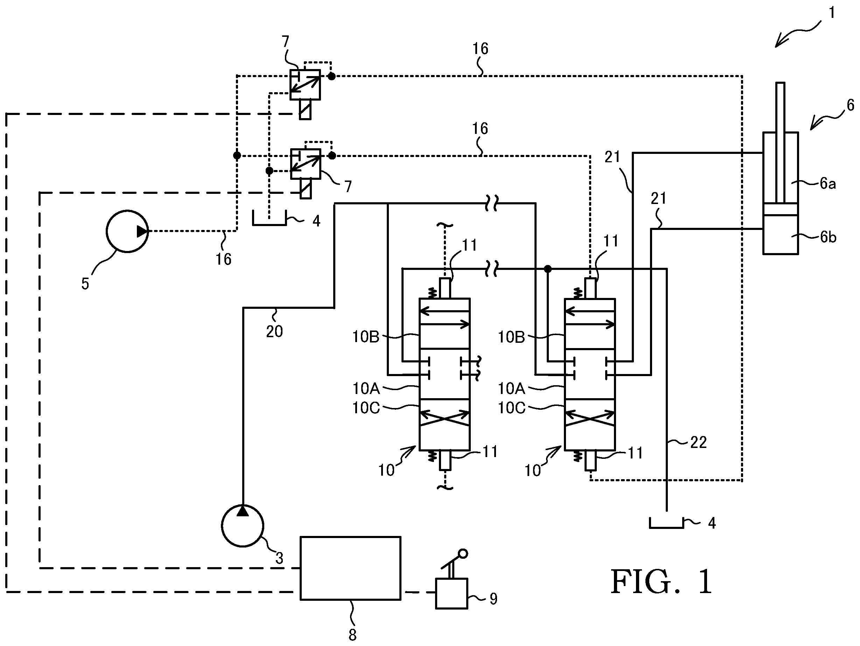

First, a hydraulic circuit of the fluid pressure control device 1 will be described with reference to FIG. 1. The fluid pressure control device 1 includes a hydraulic pump 3, a hydraulic cylinder 6 serving as an actuator to be driven by a hydraulic oil discharged from the hydraulic pump 3, a supply passage 20 through which the hydraulic oil discharged from the hydraulic pump 3 is supplied, and the control valve 10 that is provided in the supply passage 20 and controls a flow of the hydraulic oil supplied to and discharged from the hydraulic cylinder 6. A plurality of hydraulic cylinders 6 and control valves 10 are provided, and one hydraulic cylinder 6 and two control valves 10 are representatively illustrated in FIG. 1.

The hydraulic pump 3 is driven by an engine mounted on the hydraulic excavator. Without being limited thereto, the hydraulic pump 3 may be driven by an electric motor. The hydraulic oil discharged from the hydraulic pump 3 is led to the control valve 10 by the supply passage 20. The hydraulic oil is supplied to and discharged from a rod-side chamber 6a and a bottom-side chamber 6b of the hydraulic cylinder 6 through a pair of actuator passages 21. In accordance with a position of the control valve 10, one of the pair of actuator passages 21 is connected to the supply passage 20 and the other is connected to a tank passage 22 in communication with a tank 4.

The control valve 10 is a 4-port 3-position spool valve, and in the present embodiment, a plurality of control valves 10 having the same configuration are provided corresponding to the respective hydraulic cylinders 6. A pilot pressure is led to a pair of pilot chambers 11 through a pilot passage 16 in accordance with an operation direction and an operation amount of an operation lever 9 by an operator to switch the position of the control valve 10. The position of the control valve 10 is switched among a neutral position 10A, an extension position 10B, and a contraction position 10C in accordance with a magnitude of the pilot pressure supplied to the pair of pilot chambers 11.

Specifically, the pilot passage 16 is provided with a solenoid proportional pressure reducing valve 7 serving as a solenoid valve that reduces a discharge pressure of a pilot pump 5 to generate the pilot pressure. The solenoid proportional pressure reducing valve 7 is electrically connected to a controller 8 and generates the pilot pressure in accordance with a signal from the controller 8. The controller 8 transmits a control signal corresponding to the operation direction and the operation amount of the operation lever 9 to the solenoid proportional pressure reducing valve 7 to control the solenoid proportional pressure reducing valve 7. Accordingly, the control valve 10 is switched to the neutral position 10A, the extension position 10B, and the contraction position 10C, and the hydraulic oil is supplied to and discharged from the rod-side chamber 6a and the bottom-side chamber 6b of the hydraulic cylinder 6.

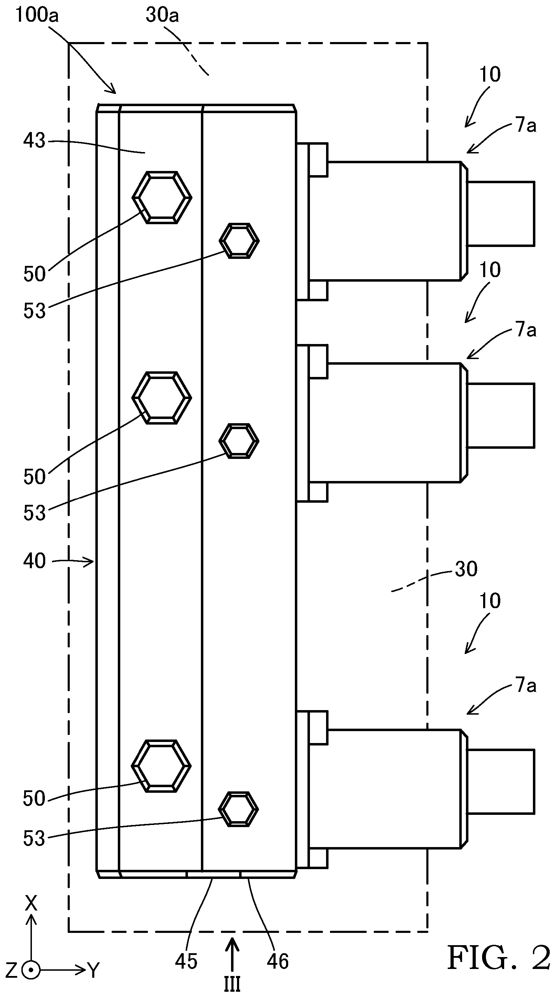

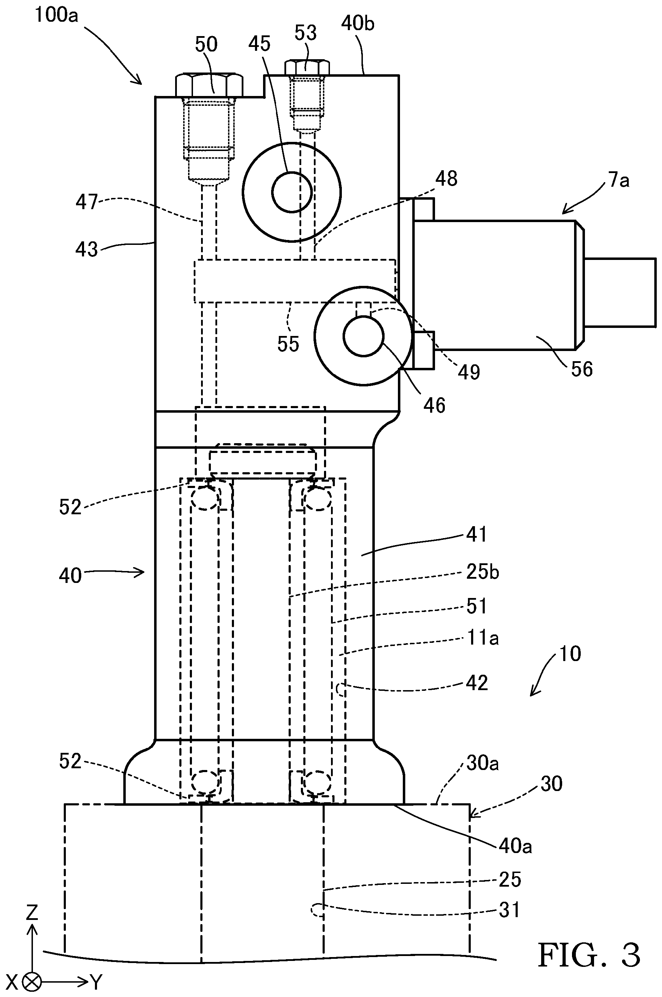

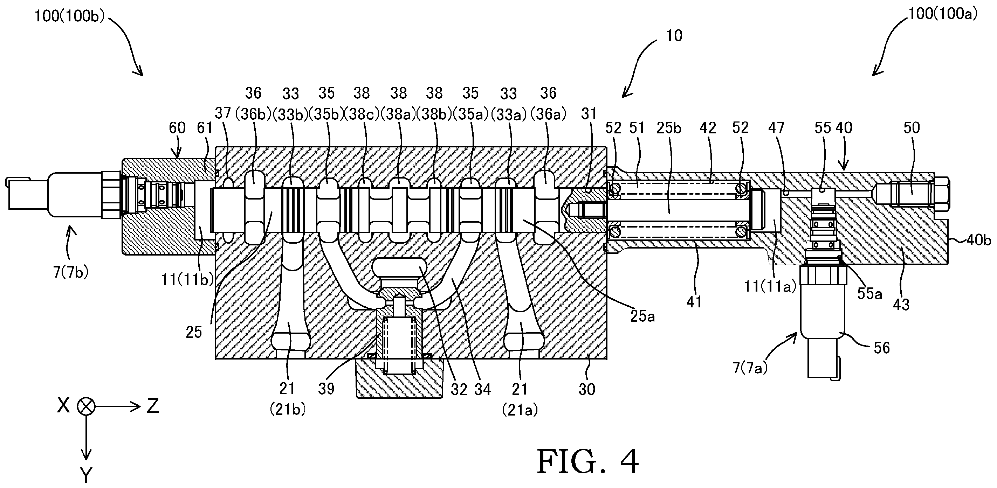

Next, configurations of the pilot cap unit 100 and the control valve 10 will be described in detail. FIG. 2 is a plan view of a first pilot cap 40 of the first pilot cap unit 100a, FIG. 3 is a side view of the first pilot cap 40 viewed from a direction III in FIG. 2, and FIG. 4 is a sectional view of the control valve 10. In FIGS. 2 and 3, a valve housing 30 to which the pilot cap unit 100 is attached and a spool 25 are indicated by a two-dot chain.

The pilot cap unit 100 is attached to the valve housing 30 of the control valve 10. In the present embodiment, the plurality of control valves 10 have a common valve housing 30. The first pilot cap unit 100a and the second pilot cap unit 100b are attached to the valve housing 30 and are provided over the plurality of control valves 10. Since the plurality of control valves 10 have the same configuration, the configuration of one control valve 10 will be representatively described below.

As illustrated in FIGS. 2 to 4, the first pilot cap unit 100a includes the first pilot cap 40 attached to the valve housing 30 to face one end of a spool hole 31, and a first solenoid proportional pressure reducing valve 7a that is attached to the first pilot cap 40 and controls a pressure of a pilot pressure oil serving as a pilot fluid supplied to a first pilot chamber 11a. The first pilot cap unit 100a is attached to the valve housing 30 to form the first pilot chamber 11a. The second pilot cap unit 100b includes a second pilot cap 60 (see FIG. 4) attached to the valve housing 30 to face the other end of the spool hole 31, and a second solenoid proportional pressure reducing valve 7b (see FIG. 4) that is attached to the second pilot cap 60 and controls the pressure of the pilot pressure oil supplied to a second pilot chamber 11b. The second pilot cap unit 100b is attached to the valve housing 30 to form the second pilot chamber 11b.

As illustrated in FIGS. 3 and 4, the control valve 10 includes the valve housing 30 which is rectangular parallelepiped and the spool 25 slidably incorporated in the valve housing 30. The spool hole 31 in which the spool 25 is slidably accommodated penetrates through the valve housing 30. The spool 25 includes a main body 25a accommodated in the spool hole 31 and a spool end 25b coupled to one end of the spool 25 and extending into the first pilot chamber 11a. A pair of spring receiving members 52 slidable along an outer periphery of the spool end 25b is accommodated in the first pilot chamber 11a, and a spring 51 serving as a biasing member is interposed between the pair of spring receiving members 52.

As illustrated in FIG. 4, the valve housing 30 includes a supply port 32 in communication with the supply passage 20, an actuator port 33 in communication with the actuator passage 21, a lead-out passage 34 in communication with the supply port 32 and leading the hydraulic oil supplied from the supply port 32 to the actuator port 33, a lead-out port 35 in communication with the lead-out passage 34, a tank port 36 serving as a second port in communication with the tank passage 22, a drain passage (not illustrated) in communication with the tank 4, a drain port 37 serving as a first port in communication with the drain passage, and a neutral port 38 in communication with a neutral passage (not illustrated) and leading the working fluid to the control valve 10 on a downstream side.

The actuator port 33, the lead-out port 35, the tank port 36, the drain port 37, and the neutral port 38 open to the spool hole 31. Two actuator ports 33, two lead-out ports 35, and two tank ports 36 are provided symmetrically. Three neutral ports 38 are provided near a center of the spool hole 31 in an axial direction. In the following description of the actuator port 33, the lead-out port 35, and the tank port 36, "a" is added to the reference numeral of each port provided on a right side of the neutral port 38 in FIG. 4, and "b" is added to the reference numeral of each port provided on a left side of the neutral port 38. Among the three neutral ports 38, the neutral port provided at the center in FIG. 4 is also referred to as a neutral port 38a, the neutral port provided on the right side is also referred to as a neutral port 38b, and the neutral port provided on the left side is also referred to as a neutral port 38c.

The tank port 36a, the actuator port 33a, the lead-out port 35a, the neutral port 38b, the neutral port 38a, the neutral port 38c, the lead-out port 35b, the actuator port 33b, the tank port 36b, and the drain port 37 open to the spool hole 31 in this order from the right side in FIG. 4. The drain port 37 is provided adjacent to the second pilot chamber 11b. Here, "the drain port 37 is adjacent to the second pilot chamber 11b" means that no other port is provided between the drain port 37 and the second pilot chamber 11b. The tank port 36a is provided adjacent to the first pilot chamber 11a. That is, no other port is provided between the tank port 36a and the first pilot chamber 11a. A sub spool 39 is provided in the lead-out passage 34.

As in the state illustrated in FIG. 4, in a state where the pilot pressure is led to neither of the pilot chambers 11, the spool 25 is at the neutral position by a biasing force of the spring 51, and communication between the lead-out port 35a and the actuator port 33a, communication between the actuator port 33a and the tank port 36a, communication between the lead-out port 35b and the actuator port 33b, and communication between the actuator port 33b and the tank port 36b are all blocked by the spool 25. The neutral port 38a is in communication with the neutral port 38b and the neutral port 38c, and the hydraulic oil led from the control valve 10 on an upstream side to the neutral port 38a is led to the control valve 10 on the downstream side through the neutral port 38b and the neutral port 38c.

When the pilot pressure is led to the first pilot chamber 11a and the spool 25 moves to the left side from the state illustrated in FIG. 4, the lead-out port 35b and the actuator port 33b are in communication with each other, and the lead-out passage 34 and the actuator passage 21b on the left side in FIG. 4 are in communication with each other. Further, the sub spool 39 is opened by the pressure of the hydraulic oil led from the supply port 32 to the lead-out passage 34, and the hydraulic oil from the supply port 32 is supplied to the actuator through the lead-out passage 34 and the actuator passage 21b. On the other hand, the actuator port 33a and the tank port 36a are in communication with each other, and the actuator passage 21a on the right side in FIG. 4 and the tank passage 22 are in communication with each other. Accordingly, the hydraulic oil is discharged from the actuator to the tank 4 through the actuator passage 21a and the tank passage 22. The communication between the neutral port 38a and the neutral port 38b and the communication between the neutral port 38a and the neutral port 38c are blocked, and the flow of the hydraulic oil to the control valve 10 on the downstream side through the neutral passage is blocked.

When the pilot pressure is led to the second pilot chamber 11b and the spool 25 moves to the right side from the state illustrated in FIG. 4, the lead-out port 35a and the actuator port 33a are in communication with each other, and the lead-out passage 34 and the actuator passage 21a are in communication with each other. The sub spool 39 is opened by the pressure of the hydraulic oil led from the supply port 32 to the lead-out passage 34, and the hydraulic oil from the supply port 32 is supplied to the actuator through the lead-out passage 34 and the actuator passage 21a. On the other hand, the actuator port 33b and the tank port 36b are in communication with each other, and the actuator passage 21b and the tank passage 22 are in communication with each other. Accordingly, the hydraulic oil is discharged from the actuator to the tank 4 through the actuator passage 21b and the tank passage 22. The communication between the neutral port 38a and the neutral port 38b and the communication between the neutral port 38a and the neutral port 38c are blocked, and the flow of the hydraulic oil to the control valve 10 on the downstream side through the neutral passage is blocked.

Hereinafter, an axial direction of the spool 25 is also referred to as a Z direction. A plurality of spools 25 and the plurality of pilot chambers 11 are arranged in a direction orthogonal to the axial direction of the spool 25. Therefore, an arrangement direction of the spool 25 and the pilot chamber 11 is also referred to as the X direction. Further, a direction orthogonal to each of the axial direction (Z direction) of the spool 25 and the arrangement direction (X direction) of the spool 25 is also referred to as a Y direction.

As illustrated in FIGS. 2 to 4, the first pilot cap 40 of the first pilot cap unit 100a includes a cylindrical tube portion 41 provided coaxially with the spool 25, a spring accommodation hole 42 (see FIGS. 3 and 4) that accommodates the spring 51 which biases the spool 25 and that defines the first pilot chamber 11a between the valve housing 30 and the spring accommodation hole 42, and a protruding end portion 43 protruding from the tube portion 41 to a side opposite to the valve housing 30 along the axial direction (Z direction) of the spool 25. The protruding end portion 43 couples a plurality of tube portions 41 (see FIG. 2). The first pilot cap 40 is attached to a side surface 31a of the valve housing 30 by a fastening member such as a bolt.

As illustrated in FIGS. 3 and 4, the first pilot cap 40 is attached to the valve housing 30 to define the first pilot chamber 11a to which one end of the spool 25 faces. The spring 51, the spring receiving member 52, and the spool end 25b are accommodated in the first pilot chamber 11a. Similarly, the second pilot cap 60 of the second pilot cap unit 100b is attached to the valve housing 30 to define the second pilot chamber 11b to which the other end of the spool 25 faces.

As illustrated in FIGS. 3 and 4, the first pilot cap 40 includes a cap-side supply port 45 which is connected to the pilot pump 5 and to which the pilot pressure oil is supplied from the pilot pump 5, a cap-side discharge port 46 that discharges the pilot pressure oil to the tank 4, a lead-out passage 48 that leads the pilot pressure oil from the cap-side supply port 45 to the solenoid proportional pressure reducing valve 7a, a valve body accommodation hole 55 serving as an accommodation hole capable of accommodating a part (specifically, valve body not illustrated) of the solenoid proportional pressure reducing valve 7a, a pilot passage 47 in communication with the valve body accommodation hole 55, a sealing member 50 that seals an opening of the pilot passage 47 which is in an outer surface 40b of the first pilot cap 40, and a cap-side drain passage 49 serving as a drain passage that is in communication with the valve body accommodation hole 55 and leads the pilot pressure oil discharged from the solenoid proportional pressure reducing valve 7a to the cap-side discharge port 46. FIG. 4 illustrates a sectional view passing through the pilot passage 47 and the valve body accommodation hole 55.

The cap-side supply port 45 and the cap-side discharge port 46 are provided at the protruding end portion 43 of the first pilot cap 40. In the present embodiment, the cap-side supply port 45 and the cap-side discharge port 46 are provided side by side on one end surface of the first pilot cap 40 in a longitudinal direction (X direction). The cap-side supply port 45 and the cap-side discharge port 46 extend in the X direction.

As illustrated in FIGS. 3 and 4, the solenoid proportional pressure reducing valve 7a includes the valve body (not illustrated) accommodated in the valve body accommodation hole 55, a solenoid 56 that applies a thrust to the valve body, and a spring (not illustrated) that applies a biasing force to the valve body in a direction against the thrust of the solenoid 56. The solenoid proportional pressure reducing valve 7a controls the pilot pressure supplied to the first pilot chamber 11a in accordance with a control current supplied to the solenoid 56. In the present embodiment, the solenoid proportional pressure reducing valve 7a is a direct proportional pressure reducing valve that increases the pilot pressure as the current supplied to the solenoid 56 increases.

The lead-out passage 48 is in communication with the cap-side supply port 45 and the valve body accommodation hole 55, and is linearly formed over the valve body accommodation hole 55 and the outer surface 40b of the first pilot cap 40. The opening of the lead-out passage 48 which is in the outer surface 40b of the first pilot cap 40 is sealed by a sealing member 53. The pilot passage 47 passes through the valve body accommodation hole 55 and is formed linearly over the spring accommodation hole 42 and the outer surface 40b of the first pilot cap 40. A plurality of lead-out passages 48 and a plurality of pilot passages 47 are provided corresponding to the respective solenoid proportional pressure reducing valves 7a. Each of the plurality of pilot passages 47 is in communication with the cap-side supply port 45. The pilot pressure oil led from the cap-side supply port 45 to the valve body accommodation hole 55 through the lead-out passage 48 is reduced in pressure by the solenoid proportional pressure reducing valve 7a and led to the first pilot chamber 11a through the pilot passage 47.

A plurality of cap-side drain passages 49 are provided corresponding to the respective solenoid proportional pressure reducing valves 7a. The cap-side drain passage 49 allows the cap-side discharge port 46 to be in communication with the valve body accommodation hole 55. The cap-side drain passage 49 opens to an opening 55a side in the valve body accommodation hole 55.

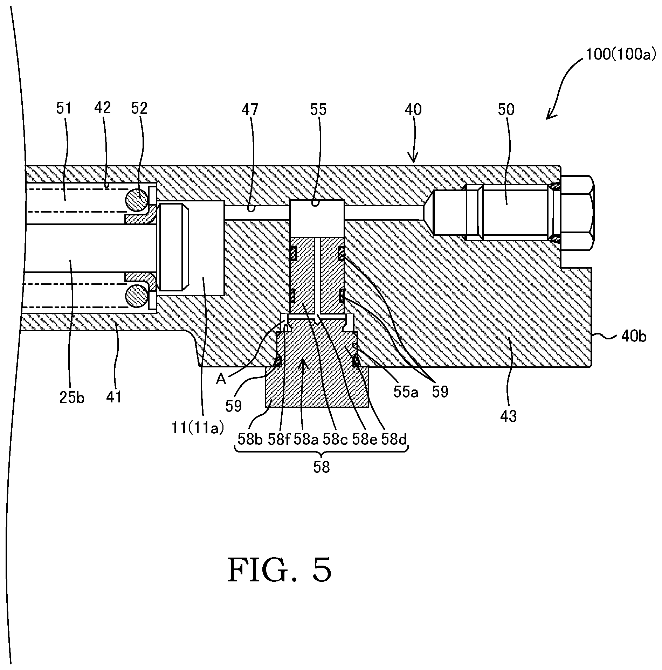

As illustrated in FIG. 5, instead of the solenoid proportional pressure reducing valve 7a, the plug 58 may be attached to the valve body accommodation hole 55. The plug 58 includes a main body 58a and a flange 58b. The main body 58a has a slightly smaller diameter than the valve body accommodation hole 55, and the flange 58b has a larger diameter than the main body 58a. When the plug 58 is attached to the valve body accommodation hole 55, the main body 58a is accommodated in the valve body accommodation hole 55, and the flange 58b abuts against the outer surface of the first pilot cap 40. An O-ring 59 serving as a seal member is provided between an outer peripheral surface of the main body 58a and an inner peripheral surface of the valve body accommodation hole 55. Accordingly, the valve body accommodation hole 55 is sealed.

The main body 58a has a small diameter portion 58c provided on a tip portion side of the plug 58 and a large diameter portion 58d provided on a flange 58b side. A plug passage 58e is formed in the small diameter portion 58c. The plug passage 58e is formed of an axial-direction passage extending in the axial direction from a tip of the main body 58a and a radial-direction passage extending in a radial direction from the axial-direction passage. The plug passage 58e always allows the pilot passage 47 to be in communication with the cap-side drain passage 49 in a state where the plug 58 is attached to the valve body accommodation hole 55. In the present embodiment, the plug passage 58e is in communication with a space A defined by the plug 58 and the valve body accommodation hole 55. The space A is an annular space defined by an outer peripheral surface of the small diameter portion 58c, a step portion 58f between the small diameter portion 58c and the large diameter portion 58d, and the inner peripheral surface of the valve body accommodation hole 55, and is in communication with the cap-side drain passage 49. The plug passage 58e and the cap-side drain passage 49 are in communication with each other through the space A. Accordingly, the pilot passage 47 and the cap-side drain passage 49 are always in communication with each other through the plug passage 58e in a state where the plug 58 is attached to the valve body accommodation hole 55. Accordingly, the first pilot chamber 11a is always in communication with the cap-side drain passage 49 through the pilot passage 47 and the plug passage 58e. Since a plurality of O-rings 59 are provided with the space A interposed therebetween, the space A is sealed by the O-rings 59, and the hydraulic oil is prevented from leaking from the space A.

As illustrated in FIG. 4, the second pilot cap 60 of the second pilot cap unit 100b has a cylindrical tube portion 61 provided coaxially with the spool 25, and the second pilot chamber 11b is defined between the valve housing 30 and the second pilot cap 60 by the tube portion 61. The pilot pressure reduced by the solenoid proportional pressure reducing valve 7b is led to the second pilot chamber 11b. Regarding a configuration of an oil passage through which the pilot pressure is led from the pilot pump 5 to the second pilot chamber 11b through the solenoid proportional pressure reducing valve 7b, for example, the same configuration as that of the first pilot cap 40 can be applied, and thus detailed description thereof will be omitted.

Here, in the control valve 10, some of the control valves 10 may be unused depending on a usage of a user. For example, depending on a construction machine on which the control valve 10 is mounted, the hydraulic cylinder 6 may not be attached to the actuator passage 21 of some of the control valves 10, and the spool 25 may be unused. In such a control valve 10, the hydraulic oil discharged from the hydraulic pump 3 may leak into the pilot chamber 11 through a space between an inner peripheral surface of the spool hole 31 and an outer peripheral surface of the spool 25. When the unused spool 25 is moved by the pressure in the pilot chamber 11, the unused control valve 10 malfunctions. In addition, when the unused spool 25 is moved by the pressure in the pilot chamber 11, the flow of the hydraulic oil is generated in the unused control valve 10, and thus the pressure of the hydraulic oil supplied to the control valve 10 in use decreases, which may adversely affect the operation of the control valve 10 in use.

On the other hand, in the first pilot cap unit 100a according to the present embodiment, the solenoid proportional pressure reducing valve 7a is removed and the plug 58 is attached instead to the valve body accommodation hole 55 corresponding to the unused control valve 10. When instead of the solenoid proportional pressure reducing valve 7a, the plug 58 is attached to the valve body accommodation hole 55, the first pilot chamber 11a is always in communication with the cap-side drain passage 49 through the pilot passage 47 and the plug passage 58e. Therefore, even when the hydraulic oil leaks into the first pilot chamber 11a, the pressure in the first pilot chamber 11a is prevented from increasing. Accordingly, even when the hydraulic oil leaks into the pilot chamber 11 (specifically, first pilot chamber 11a) of the unused control valve 10, the movement (movement in direction in which second pilot chamber 11b contracts) of the spool 25 due to the pressure of the leaked working fluid is prevented by the plug 58. Accordingly, malfunction of the unused control valve 10 is prevented.

Here, the drain port 37 is adjacent to the second pilot chamber 11b, and the tank port 36 is adjacent to the first pilot chamber 11a. The drain port 37 has a low pressure (atmospheric pressure) because it is in communication with the atmosphere, whereas the tank port 36 has a slightly higher pressure than the drain port 37 because it is in communication with the tank 4 in which the pressure is likely to be accumulated. Therefore, when the hydraulic oil leaks into the first pilot chamber 11a through the space between the inner peripheral surface of the spool hole 31 and the outer peripheral surface of the spool 25, the pressure is likely to be accumulated in the first pilot chamber 11a. However, since the first pilot chamber 11a is always in communication with the cap-side drain passage 49 by the plug passage 58e of the plug 58, the movement of the spool 25 due to the pressure of the first pilot chamber 11a is prevented by the plug 58. On the other hand, the drain port 37 is at an atmospheric pressure unlike the tank port 36. Therefore, even when the hydraulic oil leaks into the second pilot chamber 11b through the space between the inner peripheral surface of the spool hole 31 and the outer peripheral surface of the spool 25, the hydraulic oil is discharged to the drain port 37, and thus the pressure is less likely to be accumulated in the second pilot chamber 11b. Therefore, the movement of the spool 25 due to the pressure of the hydraulic oil in the first pilot chamber 11a in which the pressure is likely to be accumulated is prevented by the plug 58, and the movement of the spool 25 to one side in the axial direction is prevented, so that the malfunction of the unused control valve 10 can be prevented.

In the first pilot cap unit 100a, when the unused control valve 10 is to be used, it is only necessary to remove the plug 58 and attach the solenoid proportional pressure reducing valve 7a, so that the unused control valve 10 can be easily used. Furthermore, it is possible to cope with both use states including the used state and the unused state of the control valve 10 by selectively attaching the solenoid proportional pressure reducing valve 7a and the plug 58 to the first pilot cap 40, and thus it is possible to share the first pilot cap 40 regardless of the use state of the control valve 10.

According to the above-described embodiment, the following effects are exerted.

In the first pilot cap unit 100a, when instead of the solenoid proportional pressure reducing valve 7a, the plug 58 is attached to the valve body accommodation hole 55, the first pilot chamber 11a is always in communication with the cap-side drain passage 49 through the pilot passage 47 and the plug passage 58e. Therefore, even when the hydraulic oil leaks into the first pilot chamber 11a, the pressure in the first pilot chamber 11a is prevented from increasing. Accordingly, even when the hydraulic oil leaks into the pilot chamber 11 (specifically, first pilot chamber 11a) of the unused control valve 10, the movement of the spool 25 due to the pressure of the leaked working fluid is prevented by the plug 58. Accordingly, malfunction of the unused control valve 10 is prevented. Further, the unused control valve 10 can be easily used only by removing the plug 58 and attaching the solenoid proportional pressure reducing valve 7a.

The following modifications are also within the scope of the present invention, and it is also possible to combine configurations shown in the modifications with the configurations described in the above-described embodiment, or to combine the configurations described in the following different modifications.

### <First Modification>

In the above-described embodiment, instead of the solenoid proportional pressure reducing valve 7a, the plug 58 is attached to only the first pilot cap 40 of the first pilot cap unit 100a. In addition, instead of the solenoid proportional pressure reducing valve 7b, the plug 58 may be attached to the second pilot cap 60 of the second pilot cap unit 100b. In a state where the plug 58 is attached to the second pilot cap 60, the second pilot chamber 11b is always in communication with the cap-side drain passage formed in the second pilot cap 60 through a pilot passage formed in the second pilot cap 60 and the plug passage 58e. Accordingly, the movement of the spool 25 (movement in direction in which first pilot chamber 11a contracts) due to the pressure of the second pilot chamber 11b is prevented by the plug 58. Accordingly, the movement of the spool 25 toward both sides in the axial direction is regulated by the plug 58, and thus the movement of the unused spool 25 is more reliably prevented.

### <Second Modification>

In the above-described embodiment, an example in which the plurality of first pilot chambers 11a and the plurality of solenoid proportional pressure reducing valves 7a are provided in the first pilot cap 40 has been described, but the present invention is not limited thereto. The present invention can also be applied to a case where a single first pilot chamber 11a and a single solenoid proportional pressure reducing valve 7a are provided in the first pilot cap 40.

### <Third Modification>

In the above-described embodiment, an example in which the solenoid proportional pressure reducing valve 7 is a direct proportional pressure reducing valve that increases a pilot pressure as a current supplied to the solenoid 56 increases has been described, but the present invention is not limited thereto. The solenoid proportional pressure reducing valve 7 may be an inverse proportional pressure reducing valve that reduces the pilot pressure as the current supplied to the solenoid 56 increases.

Configurations, functions, and effects of the embodiments of the present invention configured as described above will be collectively described.

The pilot cap unit 100 attached to the control valve 10 having the valve housing 30 through which the spool hole 31 penetrates, the spool 25 being slidably accommodated in the spool hole 31, the pilot cap unit 100 including: the first pilot cap 40 attached to the valve housing 30 to face one end of the spool hole 31, the first pilot cap 40 defining the first pilot chamber 11a between the valve housing 30 and the first pilot cap 40, the first pilot cap 40 includes the valve body accommodation hole 55 serving as an accommodation hole capable of accommodating a part of the solenoid proportional pressure reducing valve 7a serving as a solenoid valve configured to control a pressure of a pilot fluid to be supplied to the first pilot chamber 11a, the pilot passage 47 in communication with the valve body accommodation hole 55 and configured to lead the pilot fluid decompressed by the solenoid proportional pressure reducing valve 7a to the first pilot chamber 11a, and the cap-side drain passage 49 serving as a drain passage in communication with the valve body accommodation hole 55 and configured to allow the pilot fluid discharged from the solenoid proportional pressure reducing valve 7a to be led thereto, the solenoid proportional pressure reducing valve 7a is attachable to the valve body accommodation hole 55, and instead of the solenoid proportional pressure reducing valve 7a, the plug 58 is attachable to the valve body accommodation hole 55, and in a state where the plug 58 is attached to the valve body accommodation hole 55, the pilot passage 47 and the cap-side drain passage 49 are always in communication with each other through the plug passage 58e formed in the plug 58.

In this configuration, when instead of the solenoid proportional pressure reducing valve 7a, the plug 58 is attached to the valve body accommodation hole 55, the first pilot chamber 11a is always in communication with the cap-side drain passage 49 through the pilot passage 47 and the plug passage 58e. Therefore, even when the working fluid leaks into the first pilot chamber 11a, the pressure in the first pilot chamber 11a is prevented from increasing. Accordingly, even when the working fluid leaks into the pilot chamber 11 of the unused control valve 10, the movement of the spool 25 due to a pressure of the leaked working fluid is prevented by the plug 58. Accordingly, malfunction of the unused control valve 10 is prevented.

The pilot cap unit 100 further including: the second pilot cap 60 attached to the valve housing 30 to face the other end of the spool hole 31, the second pilot cap 60 defining the second pilot chamber 11b between the valve housing 30 and the second pilot cap 60, in which the valve housing 30 includes the drain port 37 serving as a first port that opens to the spool hole 31, is provided adjacent to the second pilot chamber 11b, and is in communication with an atmosphere, and the tank port 36 serving as a second port that opens to the spool hole 31, is provided adjacent to the first pilot chamber 11a, and has a higher pressure than the drain port 37, and instead of the solenoid proportional pressure reducing valve 7a, the plug 58 is attachable to the first pilot cap 40.

In this configuration, the drain port 37 is in communication with the atmosphere is adjacent to the second pilot chamber 11b, and the tank port 36 having a higher pressure than the drain port 37 is adjacent to the first pilot chamber 11a. Since the drain port 37 is in communication with the atmosphere, the pressure is less likely to be accumulated in the second pilot chamber 11b. However, since the pressure is higher in the tank port 36 than in the drain port 37, the pressure is more likely to be accumulated in the first pilot chamber 11a than in the second pilot chamber 11b. Therefore, when the working fluid leaks between an inner peripheral surface of the spool hole 31 and an outer peripheral surface of the spool 25, the pressure is more likely to be accumulated in the first pilot chamber 11a than in the second pilot chamber 11b. However, the movement of the spool 25 due to the pressure in the first pilot chamber 11a can be prevented by the plug 58.

Embodiments of the present invention were described above, but the above embodiments are merely examples of applications of the present invention, and the technical scope of the present invention is not limited to the specific constitutions of the above embodiments.

With respect to the above description, the contents of application No. 2022-197203, with a filing date of December 9, 2022 in Japan, are incorporated herein by reference.

## Claims

1. A pilot cap unit to be attached to a control valve having a valve housing through which a spool hole penetrates, a spool being slidably accommodated in the spool hole, the pilot cap unit comprising:
a first pilot cap attached to the valve housing to face one end of the spool hole, the first pilot cap defining a first pilot chamber between the valve housing and the first pilot cap, wherein
the first pilot cap includes:
an accommodation hole capable of accommodating a part of a solenoid valve configured to control a pressure of a pilot fluid to be supplied to the first pilot chamber,
a pilot passage in communication with the accommodation hole and configured to lead the pilot fluid decompressed by the solenoid valve to the first pilot chamber, and
a drain passage in communication with the accommodation hole and configured to allow the pilot fluid discharged from the solenoid valve to be led thereto,
the solenoid valve is attachable to the accommodation hole, and instead of the solenoid valve, a plug is attachable to the accommodation hole, and
in a state where the plug is attached to the accommodation hole, the pilot passage and the drain passage are always in communication with each other through a plug passage formed in the plug.

2. The pilot cap unit according to claim 1, further comprising:
a second pilot cap attached to the valve housing to face the other end of the spool hole, the second pilot cap defining a second pilot chamber between the valve housing and the second pilot cap, wherein
the valve housing has a first port that opens to the spool hole, is provided adjacent to the second pilot chamber, and is in communication with an atmosphere, and a second port that opens to the spool hole, is provided adjacent to the first pilot chamber, and has a higher pressure than the first port, and
instead of the solenoid valve, the plug is attachable to the first pilot cap.
